(19) **Europäisches Patentamt / European Patent Office / Office européen des brevets**

(11) **EP 4 671 073 A1**

(12) **EUROPEAN PATENT APPLICATION**

(43) Date of publication:
**31.12.2025 Bulletin 2026/01**

(21) Application number: **24306053.0**

(22) Date of filing: **28.06.2024**

(51) International Patent Classification (IPC):
**B60W 50/00** *(2006.01)*

(52) Cooperative Patent Classification (CPC):
**B60W 50/00; B60W 50/06; G05B 13/027; G06N 3/08; G06N 3/098; G06N 20/00;**
B60W 2050/0002; B60W 2050/0014; B60W 2050/0018; B60W 2556/65

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
• **Mitsubishi Electric R&D Centre Europe B.V.**
  **1119 NS Schiphol Rijk Amsterdam (NL)**
  Designated Contracting States:
  **FR**
• **MITSUBISHI ELECTRIC CORPORATION**
  **Chiyoda-ku**
  **Tokyo 100-8310 (JP)**
  Designated Contracting States:
  **AL AT BE BG CH CY CZ DE DK EE ES FI GB GR HR HU IE IS IT LI LT LU LV MC ME MK MT NL NO PL PT RO RS SE SI SK SM TR**

(72) Inventors:
• **BOUTTIER, Arnaud**
  **35708 RENNES CEDEX 7 (FR)**
• **BECHIHI, Adel**
  **35708 RENNES CÉDEX 7 (FR)**

(74) Representative: **Plasseraud IP**
  **104 Rue de Richelieu**
  **CS92104**
  **75080 Paris Cedex 02 (FR)**

(54) **A METHOD FOR ADAPTING THE CONTROL OF VEHICLES TO DISTURBANCES, CORRESPONDING DEVICE, SYSTEM AND COMPUTER PRODUCT**

(57) The disclosure relates a computer implemented adaptive controller (AC) for use in the control of a vehicle, wherein the computer implemented adaptive controller is configured to provide a control vector $u_k$ to a vehicle driving component (VDC) of the vehicle. According to the disclosure, the adaptive controller (AC) comprises at least one first component (Cfnn_c) configured to compute a first set of composing values for the control vector $u_k$, of the vehicle according to a first neural network ($f^{nn}$), the first set of composing values being related at least to the effect of disturbances on a dynamical behaviour of vehicles, at least one part ($f_{FL}^{nn}$) of the first neural network ($f^{nn}$) being configured to be shared with at least one other vehicle.

**EP 4 671 073 A1**

2

[Fig. 3]

$$s_{k-1}^K = \{s_{k-K} \ldots s_{k-1}\}$$

$$u_k^K = \{u_{k-K+1} \ldots u_k\}$$

$$\theta_s$$

$$f^0(s_{k-1}^K, u_k^K, \theta_s)$$

$$z_k$$

$$f_{FL}^{nn}(s_{k-1}^K, u_k^K, \theta_s)$$

FL

[Fig. 4]

$$s_{k-1}^K = \{s_{k-K} \ldots s_{k-1}\}$$

$$u_k^K = \{u_{k-K+1} \ldots u_k\}$$

$$\theta_s$$

$$f_{v1}^0(s_{k-1}^K, u_k^K, \theta_s)$$

$$z_k$$

$$f_{FL}^{nn}(s_{k-1}^K, u_k^K, \theta_s)$$

FL

$$f_{v1}^{nn}(s_{k-1}^K, u_k^K, \theta_s)$$

[Fig. 5]

**Description**

Domain

The disclosure relates to a method, device, and system for adapting the control of vehicles to disturbances. More specifically, the disclosure relates to a method for adapting the control of vehicles in situations which were not previously encountered by the vehicles. The disclosure aims at providing a way to maintain the performance of vehicles when such vehicles are in autonomous or semi-autonomous driving conditions that necessitate the vehicle to adapt to its environment. More specifically, the disclosure deals with the design of controllers for vehicles subject to disturbances and to the use of these controllers in driving conditions.

Prior Art

The automatic control theory, hereafter simply reported as control, is the science dealing with methods for the determination of laws for controlling dynamical systems that can be realized by automated devices, i.e., without human intervention. At any given time t, a dynamical system has a state s(t) representing a point in an appropriate state space $\mathcal{S}$. The system is typically made of one or several devices described as a *plant* that is required to be steered from an arbitrary initial state to an arbitrary final state (also described as the reference input, or setpoint) or more generally to follow an arbitrary reference input trajectory. The reference input can be a position, a speed, a body slip angle, etc. The state of the system is driven by the so-called *controller* that generates a control action applied to the plant through *actuators*. The control action is generally materialized as one or several commands encapsulated in a said control vector. That kind of system can be described by a state-space model or representation of the kind:

$$\dot{s}(t) = f\big(s(t), u(t)\big),$$

$$y(t) = h\big(x(t), u(t)\big),$$

wherein y(t) is an observation of the state, f(.) and h(.) are generally nonlinear functions and u(t) the command or control vector generated by the controller. In the state-space model, the variables accessible to the controller are the command u(t) and the observation y(t). The state s(t) of the system is often partially unknown to the controller. The state embeds variables to describe the behaviour of the system. For example, when the considered system is a vehicle, the state can embed variables such as a position, speed, acceleration, yaw angle, yaw rate, body slip angle, etc. The command can embed variables such as a steering angle, a steering velocity, an engine torque, a breaking force, etc. Note that the term state-space model is sometimes used in the sequel to simply describe without confusion the state transition equation (first equation above).

The controlled systems can be here of any kind such as a sewing machine, a robotic arm, an automated and guided vehicle (AVG), an autonomous mobile robot (AMR), a car, a water or air drone, etc. Without losing in generality, we will focus in the sequel on the control of vehicles for which the proposed technology is particularly well suited.

Vehicles are meant to be used in diverse environments such as over roads, highways, country paths; in urban, rural, industrial areas; over flat, hilly, mountainous terrains; in different whether conditions such as snow, rain, frost, wind; with brand new, used, damaged wheels over different types of ground surface; loaded with more or less payload, fuel, people, etc. The response of a vehicle to a given command is obviously affected by the driving environment and conditions. It is thus common to describe all the effects that tend to alter the output of a system as *disturbances.*

If a disturbance is generated within the vehicle, it is called internal, while an external disturbance is generated outside the vehicle and is an input (provided to the vehicle). The disturbance can be road bumps (external), ascending and descending roads (external), wind gusts (external), inaccurate low-level controllers (internal), etc. In addition, it is common to deal with input and output disturbances. Input disturbances are those that can be modelled as acting on the input of the vehicle, such as model-uncertainty (inaccuracy), time-varying parameters, disturbances caused by unknown sources in the environment, actuator unmodeled dynamics, etc. An output disturbance, on the other hand, affects the output of the vehicle. It directly impacts the measured variable or the system's response such as noise in sensor reading.

The purpose of a controller is to minimize the deviation of the system state from a reference input and cope with disturbances. Closed loop controllers, like the Proportional Integral Derivative (PID) controllers, are designed to achieve this purpose. In such controllers, the loop is closed by using as an input an error between an observation of the system state and the reference input. However, they are not always optimal, because their parameters are generally tuned empirically, and can be unstable, leading to performance degradations and safety issues, particularly when the considered system is subject to unknown disturbances. To address this, technologies like active disturbance rejection control (ADRC) and disturbance observer-based control (DOBC) have been developed to make PID controllers less sensitive to disturbances. Another approach to cope with the limitations of closed loop controllers is the use of Model Predictive Controllers (MPC), which minimize a cost function for a constrained dynamical system over a finite, receding horizon. In such controllers, the loop is closed by computing a new command or control vector at each iteration using as a new starting point an observation of the state obtained from the application of the previous command. Among those, robust Model Predictive Controllers (RMPC) have been devised to control systems under the premise that process disturbances can be modelled as additive bounded uncertainties with known limits. But RMPC can poorly perform in case of disturbances with large deviations. In such a case, it is better to rely on the adaptive control approach where the disturbances are explicitly or implicitly estimated to be compensated for. Adaptive control automatically compensates for variations in the system's dynamics by adjusting the controller characteristics, maintaining optimal performance, increasing robustness, and preventing instability. Adaptive control methods are declined in different classes, such as feedforward (open loop) and feedback (closed loop) adaptive control, and can be direct, indirect, or hybrid. In direct methods, the estimated parameters directly influence the adaptive controller. These methods adjust the control gains online based on the estimated parameters. Essentially, the estimated parameters are directly used in the adaptive controller. Indirect methods, on the other hand, first estimate parameters in the system (i.e., the vehicle in the current case), typically the parameters of a state-space model and/or of the disturbances. Then, they use this estimated model information to calculate the required controller parameters, for instance in the MPC framework.

As previously explained, vehicles are due to drive in very diverse environments and conditions, i.e., need to adapt to several sources of disturbances that can spread over large ranges of amplitude (i.e., that exhibit large deviations from a nominal value). Traditional adaptive control technologies that rely on the selection of one within a list of predefined controllers are not well suited for such kind of situations. A possible solution is to rely on artificial intelligence (AI) techniques to update the controller from data. Typically, a neural network (NN) learns from off-line synthetic data and/or stored real data, and/or on-line real measurements the appropriate behaviour for the controller to cope with the disturbances the vehicle goes through. This approach can be applied in the direct forms (the neural network directly implements the controller, i.e., its output represents a control vector), the indirect forms (the neural network is trained to identify a vehicle's model that is further used by a controller to compute a control vector) but also the hybrid forms that combine both approaches.

AI-based adaptive control could potentially be applied locally to each vehicle. The main issue is here that vehicles may come across situations not yet met during their own training, preventing the controller to appropriately react to unmet disturbances (neural networks are able to generalise but mostly for interpolating between learning values, less for extrapolating outside learning domains). In addition to the great diversity of driving conditions, vehicles can also be heterogenous in the sense they exhibit very different dynamical behaviours. Even if adaptive control is also meant to adapt to changes in the system's dynamics, designing a controller able to adapt to a great variety of both disturbances and vehicle's dynamics is likely to require neural networks with many neurons. But large neural networks usually lead to long convergence times, local minima issues and bad performance due to the inability of the network to identify (directly or not) the nature and parameters of both the system's dynamics and the disturbances from the same set of observations. This is particularly true in case of disturbances that vary quicky in time which reduces the number of observations that can be used to perform the inference. Thus, current solutions are not able to make the vehicle quickly react to unknown or unmet disturbance patterns.

The problem addressed is thus to design a controller for vehicles, through collaborative learning (i.e., acquiring knowledge from past experiences) and control strategies, able to adapt to a great diversity of driving conditions for several heterogeneous vehicles (from the dynamical point of view).

Summary

The disclosure provides a solution for mitigating the problems met in trying to use federated learning for heterogeneous vehicles and heterogenous disturbances. More specifically, the disclosure uses an AI-driven adaptive control that enables mitigating the effect of disturbances encountered by vehicles where the effect of the disturbances is separated into a core or common contribution, applicable to an entire set of vehicles and a residual or specific contribution, applicable to a given vehicle only. In addition, the disclosure provides a solution to enable the vehicles to share their knowledge of the environments they have been through and learned about such that a vehicle can adapt to an environment never met before. Knowing that adaptive controllers can advantageously be implemented using neural networks, the inventors determined that the federated learning paradigm is a very relevant tool to deal with the diversity issue of the disturbance effects.

More specifically, the disclosure relates to a computer implemented adaptive controller for use in the control of a vehicle, wherein the computer implemented adaptive controller is configured to provide a control vector to a vehicle driving component of the vehicle, the adaptive controller comprising at least one first component configured to compute a first set of composing values for the control vector of the vehicle according to a first neural network, the first set of composing values being related at least to the effect of disturbances on a dynamical behaviour of the vehicles, at least one part of the first neural network being configured to be shared with at least one other vehicle.

According to the disclosure, the adaptive controller further comprises at least one second component configured to compute a second set of composing values for the control vector of the vehicle according to a base function.

According to the disclosure, the adaptive controller comprises at least one third component configured to compute a third set of composing values for the control vector of the vehicle according to a second neural network related to the effect of disturbances on a dynamical behaviour of the vehicle.

According to the disclosure, the base function is an analytical model which encapsulates predetermined knowledge on the behaviour of the vehicles, e.g. explicitly as a model representing the system's dynamics in nominal conditions and/or implicitly as a controller calculating control vectors for nominal conditions.

According to the disclosure, the base function belongs to the group comprising:

- A dynamical model of the vehicle obtained from physics laws,
- A dynamical model of the vehicle obtained, through model identification, from measurements and observations on the behaviour of the vehicle,
- A predefined list of parameters of the controller,
- A physics-based model of the disturbances.

The dynamical model obtained from physics laws belongs to the group comprising at least: the Point-mass model, the Unicycle model, the Bicycle model, the Ackermann model, or more complex models. The dynamical model of the vehicle obtained, through model identification, from measurements and observations (i.e., the corresponding inputs and outputs of the system) on a nominal behaviour of the vehicle, belongs to the group comprising at least: a neural network model, a transfer function, an impulse response function, a state-space model, or other systems representations. The predefined list of parameters of the controller is for example PID coefficients for a PID controller, generally identified experimentally to achieve a targeted performance in nominal conditions. The physics-based model of the disturbances is for example the gravity force, the aerodynamics forces, the friction forces.

According to the disclosure, the at least one first component is configured to provide the first set of composing values as a function of at least one previous input.

In some situations, the of at least one previous input is combined with the corresponding output denoted hereafter as a pair of corresponding input and output.

The two previous statements can also apply to the second and/or third component and/or second and/or third set of composing values.

For example, the at least one previous pair of corresponding input and output can take the form of one or several previous observations of state values of the vehicle associated with one or several previous control vectors, and/or one or several previous errors between an observation of the state and a reference input associated to one or several previous control vectors and/or an initial set of parameters specific to the vehicle.

In one situation, the at least one previous input comprises at least two previous control vectors, at least two previous states of the current vehicle and an initial set of parameters specific to the vehicle. By referring to more than one previous state and/or more than one previous control vector, the disclosed method allows taking the temporal evolution of the system into account for determining the first set of composing values, thanks to the shared part of the neural network of the first component.

According to the disclosure, the adaptive controller further comprises an input adaptation component, the input adaptation component being configured to adapt input control vector values, input state vector values, input error values between observed state vectors and a reference input, and initial set of parameters values, for use by the at least one first component. This can also be applied to the at least one second component, and/or the at least one third component.

According to the disclosure, the input adaptation component takes the form of a neural network.

According to the disclosure, the adaptive controller further comprises an output adaptation component, the output adaptation component being configured to calculate at least one adapted composing value from at least the first set of composing values for use by the output control vector generation. This can also be applied for the second set of composing values and/or the third set of composing values.

According to the disclosure, in one example, the input adaptation component is configured to calculate the adapted composing values as a function of at least one of its previous inputs combined with the corresponding outputs of the output adaptation component and/or of the at least one first component and/or of the at least second component and/or of the at least one third component.

According to the disclosure, the adaptive controller further comprises a control vector generation component, the output control vector generation component being configured to calculate the control vector as a function of at least one adapted composing value. This can also be applied for the at least first composing values and/or the at least second composing values and/or the at least third composing values, which can be considered as the adapted composing values.

According to the disclosure, the output adaptation component takes the form of a neural network.

According to the disclosure, the adaptive controller is configured to operate as a controller that belongs to the group:

- a model predictive controller (MPC),
- a controller fully implemented as a neural network,
- an analytical controller configured with parameters estimated using a neural network (such as PID controllers).

In another aspect, the disclosure also relates to an electronic device comprising a processor, a memory and at least one communication interface. According to the disclosure, the electronic device comprises a computer implemented adaptive controller according to any of the preceding claims.

In another aspect, the disclosure also relates to a vehicle comprising an electronic device as exposed above.

In another aspect, the disclosure also relates to a computer program product comprising instructions which, when executed by at least one processor, configure said at least one processor to carry out a controlling method executed by the computer implemented adaptive controller as exposed above.

Drawings

The disclosure will be better understood upon reading the following description, given as an example that is in no way limiting, and made in reference to the figures which show:

- figure 1: illustrates a neural network-based adaptive controller according to an implementation,
- figure 2: illustrates four possible implementations of the adaptive controller according to the disclosure,
- figure 3: illustrates the functioning of the adaptive controller according to the disclosure,
- figure 4: illustrates an example of separation of the disturbance awareness inclusion according to the disclosure, comprising a base function and a federated neural network,
- figure 5: illustrates a second example of separation of the disturbance awareness inclusion according to the disclosure, comprising a base function, a federated neural network, and a specific neural network,
- figure 6: illustrates the selection of contiguous weights in a neural network, the contiguous weights being the federated ones according to the disclosure,
- figure 7: illustrates a more complex architecture in which the federated part is included in a specialized neural network,
- figure 8: illustrates a purely neural network controller according to an implementation, in which a part of the neural network is federated,
- figure 9: illustrates a more complex architecture in which two additional components are added to mitigate the input and attenuate the outputs allowing flexibility,
- figure 10: illustrates a second more complex architecture in which two additional components are added to mitigate the input and attenuate the outputs allowing flexibility,
- figure 11 illustrates an example of device designed to implement the method and models of the disclosure.

In these figures, references identical from one figure to another designate identical or analogous elements. For reasons of clarity, the elements shown are not to scale, unless explicitly stated otherwise. Also, unless required by the language of the description, the order of steps represented in these figures is provided only for illustration purposes and is not meant to limit the present disclosure which may be applied with the same steps executed in a different order.

Description of embodiments

General disclosure

The present disclosure deals with the automatic control of dynamical systems such as vehicles that evolve in different environments and conditions. With respect to the disclosure, vehicles are deemed to comprise road vehicles, air vehicles, marine vehicles. While evolving, vehicles, depending on their class, suffer from disturbances resulting e.g., from the unknow slope of the road, longitudinal wind, mass of the people or load onboard, effects of submarine current, effects of temperature, etc. Traditional feedback controllers such as PID or robust MPC controllers can compensate for the occurrence of unknown disturbances but at the cost of a degradation of their performance, up to instability issues in case of large deviations. In such situations, it is common to rely on adaptive control that tends to adapt to disturbances to maintain an optimal performance, increase robustness, and prevent instability. The problem is to identify the contribution of the disturbances that can show an important variability in their form, amplitude, and impact depending on the evolving conditions. It is focused here on data-driven neural-network based controllers where the controller uses live (on-line) data measured by the vehicle to generate a command (control vector) that adapts to the disturbances met by the vehicle at the time it is driving. A key advantage of using controllers that embed a neural network is to enable the use of federated learning to share (all or part of) the knowledge between vehicles that have driven and learned through different environments.

For solving these problems, it is proposed to design controllers relying on the federated learning that enables to share knowledge, typically the weights of a neural network, instead of large learning datasets. Dealing with identical vehicles (same dynamical behaviour and same vehicle parameters (e.g. the mass or the cross-sectional area of the vehicle, used in combination with a predefined function to describe the system's behaviour) or similar vehicles (same dynamical behaviour but different parameters used in combination with a common predefined function to describe the system's behaviour), the same controller can be applied where the neural network, possibly parameterized by known vehicle parameters, learns the effect of the disturbances from previous inputs, e.g., from previous states and/or previous errors between the state and a reference input in combination with previous commands. More precisely, the neural network generates composing values to generate a control vector that enables to mitigate the impact of the unknown disturbances met by the vehicle, explicitly or implicitly estimated from the observations.

An important issue, however, is to deal with heterogeneous vehicles (which belong to an identified class of vehicle, for example: road vehicles, submarine drones, aerial drones) that exhibit different dynamics and behaviours. Heterogeneous road vehicles have different shapes and masses (such as compact cars, crossover cars, trucks, buses), different engines (electric motors, diesel engines, hybrid engines), and different drivetrain (such as front-wheel drive (FWD), all-wheel drive (AWD), rear-wheel drive (RWD)). It is consequently proposed, in an implementation, to collaboratively learn, from the observations, how to generate composing values to mitigate the impact of the disturbances that have a common effect on the dynamical behaviour of all vehicles of a class.

Despite their heterogeneity, heterogenous vehicles, as introduced above, are subject to disturbances that have the same sources such as variations of the road slope, changes of the weather conditions (e.g., wind, rain and snow), variations of the vehicle's load (related to the number of passengers for example). These disturbances induce changes in the vehicles' behaviours leading to a drift from the target behaviour expected by the control designer. Although, the vehicles dynamics are different, similar disturbances have similar effects on their behaviours. For example, driving on a wet road will increase the braking distance compared to a dry one. An increasing road slope will cause a decrease of the vehicle's velocity compared to a flat road. Thus, common effects are observed on the vehicles' behaviours for similar disturbances.

More specifically, it is proposed to apply the federated learning to a same reduced part of the neural network (or a dedicated neural network, hereafter called federated sub-network) implemented in the controller of the different vehicles. By forcing the federated sub-networks to learn the common effects or contributions of the disturbances, the disclosure allows obtaining an efficient manner of managing the effect of the common effects of the disturbances through sharing this acquired knowledge between heterogeneous vehicles. Typically, the impact of the road slope is similar in essence but not in value on almost all types of vehicles, i.e., the application of a positive or negative force whatever the vehicle is a regular city car with a combustion engine, a sport car, or a four-wheel drive (4WD or 4x4) vehicle with separate electrical engines. The remaining (specific, i.e., not federated) part of the neural network is also trained, and its output is combined with the output of the federated sub-network in order to generate a control vector specific to each vehicle. This combination allows to generate a composed control vector for the specific vehicle and may be a simple addition of the outputs of the federated and the non-federated parts. Or, in a more complex setting, the output of the federated sub-network is used to feed the non-federated part of the neural network. It can be noted that the use of neural networks enables to be independent of the physical origin of the disturbances (as long as the neural network identifies that the vehicles suffer from different disturbances similar in terms of impact on the dynamical behaviour). This technique is applicable to any of the controller architectures considered herein.

As explained below, the dynamical behaviour of the considered vehicles can be significantly impacted by several disturbances such as the wind, the road declivity, the road surface properties, etc., where the occurrence, nature and amplitude of the disturbances can vary in time. To benefit from an optimal and safe control, we focus here on the application of adaptive control where the command is generated to dynamically account for the occurrence of variations in the system's dynamics, typically resulting from time varying disturbances. Furthermore, we focus here on machine learning (ML) or AI-based adaptive controllers where the controller uses live (on-line) data measured by the vehicle to generate a command (control vector) that adapts to the disturbances the vehicle is facing at the time it is driving.

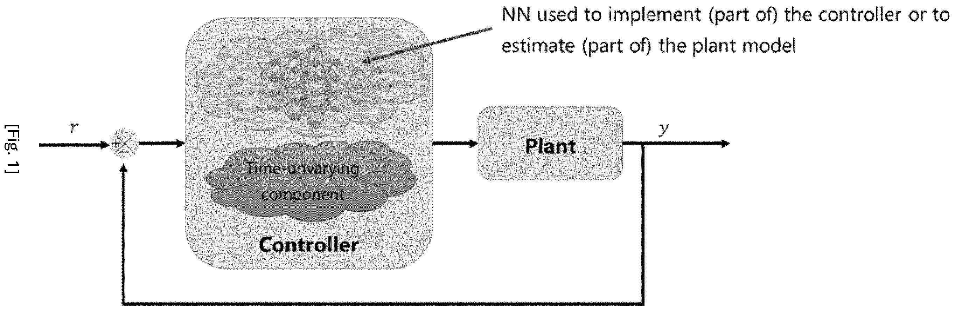

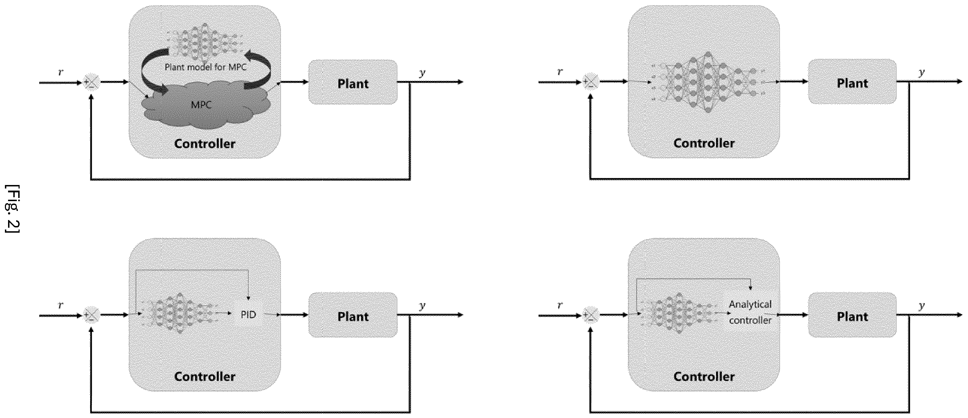

Typically, the controller integrates a neural network that contributes to the computation of the control vector providing one or several composing values of the control vector from inputs measured by the vehicle, typically its state (position, velocity, acceleration, steering angle, etc.) but also any other measurements reflecting the interaction of the vehicle with its environment. The main advantage of data-driven controllers is to extract from "raw data" the required information to accurately adapt to any kind of disturbances as long as they have been trained accordingly. They also allow to benefit from the generalization principle of neural networks to adapt, up to some extends, to disturbance profiles not met during the training. Such data-driven controllers can be trained from real or synthetic data, on-line while driving or off-line from data captured and stored by the vehicles along their travel. It shall be mentioned that the proposed approach is suitable to any controller architecture that embeds a neural network contributing to the generation of a command adapted to the disturbances that impact the vehicle at the time it is driving (illustration is made in figure 1). Typical examples of such implementations are (as illustrated in figure 2):

- MPC controller where the system's model is implemented as a neural network,
- Classical controller fully or partially implemented as a neural network,
- Analytical controller configured with parameters estimated using a neural network such as a PID controller with coefficients computed by a neural network, or disturbance parameter estimated by the neural network.

According to the disclosure, part of the neural network is federated (shared between vehicles) even if these vehicles are heterogenous. This allows learning of the common effects of the disturbances for all vehicles (the core contribution), regardless of their specific characteristics.

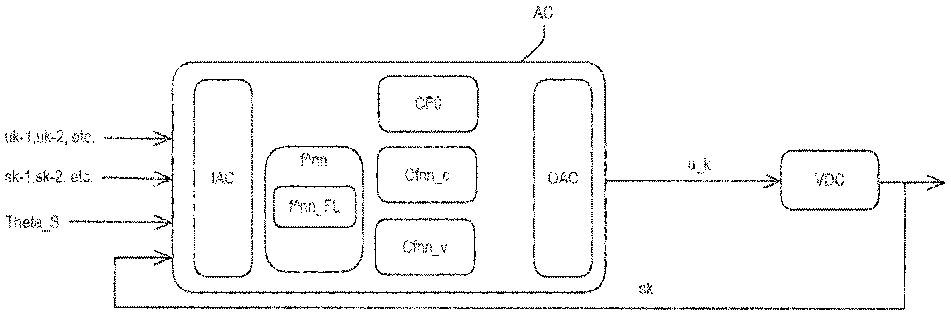

Figure 3 illustrates an architecture of the adaptive controller (AC) of the disclosure according to an embodiment. According to the disclosure, the computer implemented adaptive controller (AC) is used in the control of a current vehicle. The computer implemented adaptive controller is configured to provide a control vector ($u_k$) to a vehicle driving component (VDC) of the current vehicle. The adaptive controller (AC) comprising at least one first component (Cfnn_c) configured to compute a first set of composing values for the control vector ($u_k$) of the current vehicle according to a first (part of a) neural network ($f^{nn}$), the first set of composing values being related at least to the effect of disturbances on a dynamical behaviour of the vehicles, at least part of the first neural network ($f_{FL}^{nn}$) being configured to be shared with at least one other vehicle. The neural network ($f^{nn}$) can be part of or accessed by the at least one first component (Cfnn_c).

According to some implementations, the adaptive controller (AC) can also comprise at least one second component (Cf0) which computes a second set of composing values for the control vector ($u_k$) of the vehicle according to a base function which represents a predefined control vector computing function determined by the predetermined knowledge of the controller designer on the system. It may represent a PID controller that is fed by a set of observed variables of interest (e.g., the error between the system's observations and the input reference) used as an input to generate the control vector. It may also represent an analytical model deduced from physics laws or from data which is used to model a predetermined knowledge on the system, for instance, the vehicle's dynamics or part of the vehicle's dynamics, the disturbances sources, or their effects on the vehicle's behaviour, as exposed in figure 2.

According to an implementation, for example an MPC implementation, a physics-based model, on which the general behaviour of the vehicle is modelled is a Single-Track dynamics model (also called bicycle model). Other models can of course be implemented, depending on the situation, as it is described herein after. In addition, physics-based models deduced from conventional physics laws or empirical models built from observed data either using traditional estimation and model identification technics or modern AI-based model, namely neural networks, can also be implemented for other types of controllers, depending on the situations and constraints of these controllers.

According to an implementation, the adaptive controller (AC) also comprises at least one third component (Cfnn_v) which computes a third set of composing values for the control vector ($u_k$) of the vehicle according to a second neural network ($f_v^{nn}$) (or a part of the first neural network) related to the effect of disturbances on a dynamical behaviour of the current vehicle only.

According to an implementation, the sets of composing values are (indirectly or directly) used by a control vector generation component. More specifically, when present, this control vector generation component can calculate the control vector ($u_k$) as a function of input data such as observations or measurements acquired by onboard or remote sensors, an information on the actual state of the vehicle or a predicted state of the vehicle computed by a state observer or a state predictor, or equivalent data regarding the type of controller. With the provided control vector, the vehicle driving component (VDC) executes the commands, and measures an effective state, being transformed by a state observer component. The components are iteratively implemented (e.g. some of their values can be updated) by the controller along the evolution of the vehicle in its environment.

In what follows and what precedes, the adaptive controller (AC) is described in the form of components, each component having one or more functions, taking as input the data it requires and providing as output other resulting data. Thus, although described in the form of components, it is understood that processing is also describable in the form of method steps, such methods being immediately derivable from the present description, and are in the scope of the present disclosure.

Related to the disclosed situation in prior art, hence, the disclosure aims at providing a solution for a vehicle to better adjust to novel situations that the vehicle has not faced before by using the knowledge of other vehicles. For instance, with respect to the prior art notation already described, the aim is to provide the vehicle with a control vector (such as the percentage of engine power to be applied to a situation) that takes account not only of the vehicle itself but also of the disturbances it is subjected to. For example, by supposing that to climb a 7% (positive) slope at a speed of 50km/h, a car must be given 40% engine power. It is assumed that the controller knows (projects) that to reach a speed of 50km/h on a "flat" road, the power to be applied to the engine is 20%. The question is how the vehicle should be controlled to reach a speed of 50km/h on a 7% gradient.

The vehicle adaptive controller (AC) therefore needs to be supplied with additional data (the (previous) effective state(s) of the vehicle and/or an estimated previous state of the vehicle and/or previous commands and/or a set observations or measurements) so that it can take this state into account to adapt the values of the control vector to be supplied to the vehicle. To facilitate the controller's task, it must be able to take this slope disturbance into account. In this example, the slope (and its value) is a disturbance experienced by the vehicle, which is time-dependent through its dependency on the vehicle's state, namely its position in this example, (i.e., the effect of the disturbance will end at a given time since the vehicle is moving). In some implementations, the vehicle can be made aware of the disturbance by calculating the difference between the expected measurements inferred from the expected state of the vehicle and the actual measurements. In some situations, some sensor values (e.g. a GPS locates the vehicle on a road map, itself providing the slope information given the direction in which the vehicle is travelling) could possibly be used to learn some additional features and/or disturbances effects. The controller comprises a module that includes components that are designed to deal (i.e., allow the vehicle to behave correctly) with typical values of disturbances (e.g. a component that provides values (of the target control vector) that are indicating that to drive at 50km/h without an incline, 20% power is required) and a component that is sensitive to disturbances (e.g. a component that provides values (of the target control vector) that are indicating that to drive at 50km/h, an additional 20% power is required).

The disclosure proposes to learn collectively (i.e., for all vehicles of a given class, even heterogeneous ones - i.e., the vehicles are not the same) the way in which the vehicle should be controlled. This collective learning is federated: in other words, for a given model of vehicles, e.g., cars, one learns both a dynamical behaviour adjustment (i.e., control) that depends on the vehicle itself and a dynamical behaviour adjustment that is common to all road vehicles in the same class. Taking the previous example again, federated learning allows to infer, for example, that for a given car to travel at 50km/h and for the disturbance (the gradient is 7% uphill), additional power of 12% is required (common to all cars) and additional power of 8% is required specifically for that car. For a second car (which would be lighter, for example), one deduces that to drive at 50km/h, at gradient is 7% uphill, additional power of 12% is required (common to all road vehicles) and additional power of 1% is required specifically for this second car. The advantage of this is that, since learning is federated, assuming that the second vehicle has never encountered a situation where the gradient was 7%, it is able, as soon as this situation is encountered, to increase the power delivered by 12% (which corresponds to the common situation), and all the second vehicle has to do is to make its controller learn the additional power required (i.e. the 1%).

According to the disclosure, application of federated learning trains machine learning algorithms, for instance multi-perceptron layers neural networks or recurrent neural networks, on multiple local datasets contained in vehicles without explicitly exchanging data samples, meaning that each vehicle learns on the go its specific behaviour (or retrieve some specific behaviour data from vehicle datasets). The method of the disclosure consists in training local neural networks on local data samples and exchanging parameters (e.g., the weights and biases of the neural networks) between these local nodes at a predetermined frequency to generate a global model shared by all vehicles. Parameters are uploaded, by the vehicles, to a specific server which aggregates the transmitted parameters and delivers the federated parameters to the vehicle fleet.

In summary, the disclosure provides a controller in which the responses to be given to disturbances are learned along two axes: namely the common responses to be applied to disturbances and the specific responses to be applied to disturbances. A key advantage is to enable vehicles to quickly react to unknown or unmet disturbance patterns, with minimum computational costs.

The disclosure is applicable to public vehicles or private fleets. It can also be devised either for sparse vehicles, or geographically localized vehicles such as in platoons. Depending on the application and the scenario, several deployment strategies might be devised. A key factor lies in the learning methodology. Basically, the proposed method can be applied to any vehicle that would first rely on a basic, robust, thus sub-optimal controller to learn while driving (on-line learning) how to best adapt to the met environments. All the vehicles will thus constantly enrich their common knowledge. This approach is well suited for fleets of few vehicles, typically privately owned (platoons of trucks, robots in factories, etc.). It can also be adapted for public vehicles that need to offer better control performance as soon as starting to drive. It is also possible to use dedicated vehicles, hereafter called pilot vehicles, typically furbished with advanced computing capabilities to build an initial version of the controller. This allows for checking the relevance and safety of the controller before its deployment over standard vehicles. Standard vehicles are then initialized with a well-designed controller before starting to be driven. Then, several other possibilities are considered. Standard vehicles never apply learning but are from time to time configured with an updated controller when enriched by the pilot vehicles. The standard vehicles can also apply a continuous learning, but better, are able to detect new environments to apply the learning only during these phases. They can also either store the corresponding data or perform the learning without applying the new neural network but transfer it to a specific entity (server) that uses this information to perform the update and the checking of the controller (the information can be sent by cellular radio while driving, through WiFi when parked at home, or using any wired solutions, also when parked at home).

The disclosure comprises two different aspects: the first one is related to the federated learning of disturbance contribution affecting vehicles while travelling in various situations and the second one is related to the use of the federated part of the learnt parameters in vehicles for situations or conditions which have never been met. While disclosed in the form of components, it is understood the underlying functions of these components are easily convertible in steps of method, which are completely part of the present disclosure.

Description of exemplary implementations

Vehicle model definition

As mentioned above, it is assumed that one needs to control, thanks to the controller (AC) at least one part of the behaviour of a vehicle driving in autonomous or semi-autonomous mode. It is assumed, also, that the vehicle is controlled in feedback mode. However, the methods described in the sequel also apply for control in feedforward mode. The system representing the vehicle can be described by a state transition equation of the kind:

$$s_k = f(s_{k-1}, u_k), s_0 = S_0$$

wherein $s_k$ describes the state of the system, $u_k$ the command (control vector) generated by the controller (AC), and $f(.)$ a nonlinear function and $S_0$ the initial state value at k = 0. Note that the system is modelled here with a discrete time equation, but the proposed methods also apply to system described using a continuous time representation. The state of the system is observed by means of sensors as:

$$y_k = h(s_k)$$

wherein $y_k$ is an observation of the state of the system and $h(.)$ a possibly nonlinear function. The system is controlled to drive a part (or all) of the state denoted as $\bar{x}_k$ to a given reference input $r_k$. The command is computed (by the controller function $g$) using an estimation $q_k$ of $\bar{x}_k$ obtain from the observation $y_k$:

$$u_k = g(q_{k-1}, r_{k-1})$$

The vehicles drive in different environments and conditions that are sources of disturbances in the system. The effect of the disturbances is modelled through the addition of a disturbance component $d_k$ in the state transition equation:

$$s_k = f(s_{k-1}, u_k, d_k)$$

Vehicles such as those considered in the disclosure can exhibit rather complex dynamics that depend on parameters related to the physical architecture of the vehicle. To simulate such systems (e.g., for designing MPC controllers according to the exemplary implementation), it is required to model (in an analytical form for example) their dynamics. It is recalled that the kinematics deals with the study of motions (position, velocity, acceleration) and all possible configurations of a system subject to constraints, while dynamics deals with the full consideration of time varying phenomena in the interaction between motions, forces, and material properties. Several approaches are used to analytically model these systems:

- Physics-based models that tend to describe the behaviour of the system using an actual representation of its components and their interaction,
- Conceptual models that tend to describe the system with physical-agnostic equations, such as a linearization of the physical model,
- Data-driven models where the system is described by a deep neural network where the input/output relationship has been derived using machine learning applied on observations captured from the vehicle.

Physics-based models can be very complex as soon as they tend to describe all the effects impacting the course of a vehicle such as those related to the suspensions and wheels etc. It has been shown that it is often better to describe vehicles with "simple" models and leave the remaining part appears as internal disturbances that can be dealt with by the controller as long as their effect is small with respect to safety constraints. A few models are commonly used to describe four-wheel vehicles:

- Point-particle model,
- Point-mass model,

- Unicycle model,
- Bicycle model,
- Ackermann model,
- etc.

To provide a better insight of the methods of the disclosure, three of these models are described (Point-particle, point-mass, and bicycle models) and one is used to implement the controller (AC), namely the bicycle model. One can note that these descriptions are purely illustrative: they are used to better understand the exemplary implementation of the controller (AC).

Rigid body vehicles such as those considered here have at most six degrees of freedom (DoF): three translating motions along three orthogonal axes and three rotary motions around these axes. Without losing in generality, we consider here rigid body vehicles moving over a plane, thus reducing to three the number of DoF, two translating motions and one rotary motion around the axe orthogonal to the plane. The motions of such vehicles are commonly described using two right-handed, Cartesian coordinate systems. The first one, called Earth frame, with axis (x, y, z) has its origin fixed in the reference frame of the Earth, where:

- The origin is any arbitrary, fixed point relative to the surface of the Earth supposed to be plane,
- The x-axis is positive in the direction of North,
- The y-axis is positive in the direction of East,
- The z-axis is normal to the road, the positive direction being upwards,

The second coordinate system, called body frame, with axis (X, Y, Z) is attached to the body of the vehicle where:

- The origin is fixed in the body of the vehicle typically at the centre of gravity,
- The X-axis is positive in the driving direction of the vehicle,
- The Y-axis is positive in the direction of East when the X-axis is in the direction of North,
- The Z-axis is normal to the road, the positive direction being upwards,

The X and Y correspond to the longitudinal and lateral axles of the vehicle, respectively.

• Point-particle model

A point-particle model is a physics-based model for simplifying reality. The point-particle model assumes that object's shape and size do not matter to the description of its kinematics. The model abstracts the vehicle as a point, typically its centre of mass, driven in velocity or acceleration. When driven in velocity, the vehicle can be modelled using the state:

$$s(t) = \begin{bmatrix} p_x(t) \\ p_y(t) \end{bmatrix}$$

in which $(p_x(t), p_y(t))$ is the position of the vehicle centre of mass in the Earth frame. The vehicle can be modelled as a first-order integrator with the state transition equation:

$$\dot{s}(t) = \begin{bmatrix} \dot{p}_x(t) \\ \dot{p}_y(t) \end{bmatrix} \triangleq \begin{bmatrix} v_x(t) \\ v_y(t) \end{bmatrix} = u(t)$$

in which $u(t) = [v_X, v_Y]^t$ is the command applied to control the velocity of the vehicle over the X and Y axis. As the point-particle model has no orientation, it is assumed that the body frame is attached to the centre of mass with the X|Y-axis colinear to the x|y-axis of the Earth frame. When driven in acceleration, the vehicle can be modelled using the state:

$$s(t) = \begin{bmatrix} p_x(t) \\ p_y(t) \\ v_x(t) \\ v_y(t) \end{bmatrix}$$

The vehicle can be then modelled as a second-order integrator with the state transition equation:

$$\dot{s}(t) = \begin{bmatrix} v_x(t) \\ v_y(t) \\ a_x(t) \\ a_y(t) \end{bmatrix} = \begin{bmatrix} 0 & 0 & 1 & 0 \\ 0 & 0 & 0 & 1 \\ 0 & 0 & 0 & 0 \\ 0 & 0 & 0 & 0 \end{bmatrix} \begin{bmatrix} p_x(t) \\ p_y(t) \\ v_x(t) \\ v_y(t) \end{bmatrix} + \begin{bmatrix} 0 & 0 \\ 0 & 0 \\ 1 & 0 \\ 0 & 1 \end{bmatrix} u(t)$$

in which $u(t) = [a_X, a_Y]^t$ is the command applied to control the acceleration of the vehicle over the x and y axis. The point-particle model is clearly a simplified model. Unlike most 4-wheel vehicles, it does not account for a possible turning radius. As a matter of fact, the point-particle model has a poor accuracy as the vehicle can move in any direction, even perpendicularly to its orientation, if any (some constraints can be added to improve its accuracy). With only two translational DoFs, the point-particle model is missing the rotational DoF of rigid body vehicles. In other word, it is not possible to model the orientation of the vehicle that remains fixed in the Earth frame. The point-particle model is often used to model (or control) the velocity of vehicles along their trajectory while a lateral controller steers the vehicle's wheels for path tracking. It is assumed that the lateral controller is able to keep the vehicle on the planned track or that the trajectory is updated according to the actual motion of the vehicles.

• Point-mass model

Kinematic models are meant to describe the motion of objects without considering the forces causing the motion. Using kinematic models, it is possible to determine how the system's position changes in time when required to achieve a reference speed or acceleration. However practical systems are not controlled directly in terms of speed and/or acceleration but e.g., by applying a force on a steering wheel or by adjusting the torque of an engine. Depending on the mass of the vehicle, the nature of the ground surface, the friction of the wheels, the occurrence of wind, the vehicle will not achieve the same trajectory given the same command or control vector. This is the purpose of dynamic models to describe how those forces translate into the motion of the vehicle. Depending on the purpose, dynamic models can be more or less accurate in considering the physical effects that affect the motion of the vehicle.
The point-mass model is used to model or control the dynamics of vehicles, i.e., their motion accounting for the forces and disturbances they are subject to, starting with the effect of the mass. Typically, it is assumed that all the vehicle's mass is concentrated at its centre of mass allowing to model it as a dimensionless mass point, thus the name of the model. All the inertial moments and angular accelerations around its centre of gravity are not included in the model. It is then possible to model the vehicle as a point of mass m, subject to the second Newton's law:

$$ma_x = ma_X = F_X$$

$$ma_y = ma_Y = F_Y$$

in which $(F_X, F_Y)$ is the resultant off all the forces applied at the centre of mass along the *X*- and *Y*-axis, including the propulsive force but also possible disturbances such as the gravitational force when driving over a slope, the air drag force, etc. To avoid the need to deal with the elevation axe, it is assumed that the Earth is always plane but that the gravitation vector is inclined with an angle $\phi$ with the plane to reflect a possible road slope, here applied only in the direction of the X-axis. Overall, we have:

$$ma_X = F_X^d - F_X^a - F_g - F_X^m$$

$$ma_Y = F_Y^d - F_Y^a$$

in which $F_{(X|Y)}^d$ is the component of the driving/braking force in the XIY direction, $F_g$ is the gravity force amplitude at the centre of mass, $F_{(X|Y)}^a$ is the equivalent aerodynamic drag force, $F_X^m$ the motion (rolling) resistance of the wheel. Note that this model is somehow hybrid, as there is no mention about the physical command applied to steer the wheel. Thus:

$$F_X^a = \frac{1}{2}\rho C_d A_f (v_X + v_{Xw})\sqrt{(v_X + v_{Xw})^2 + (v_Y + v_{Yw})^2}$$

$$F_Y^a = \frac{1}{2}\rho C_d A_f (v_Y + v_{Yw})\sqrt{(v_X + v_{Xw})^2 + (v_Y + v_{Yw})^2}$$

$$F_g = mg \sin\phi$$

$$F_X^m = mgC_r \cos\phi$$

in which $\rho$ is the air density, $v_{(X|Y)w} = \alpha v_{(X|Y)}$, $\alpha \in \mathbb{R}$ is the wind speed in the traveling direction (thus, measured as a proportion of the vehicle speed), $A_f$ the projected frontal area of the vehicle, $g$ is the gravitational constant, $C_d$ the air drag coefficient and $C_r$ the friction coefficient between the wheel and the road. In this case, only the air flow opposite to the trajectory of the centre of gravity of the vehicle is considered. If the influences of both the side stream and the vertical forces need to be considered, then the air motion equations need to be extended correspondingly. The Second Newton's law relates the acceleration to all the forces that are applied to the centre of mass of the vehicles, including the ones used to control the vehicle. The dynamics model is thus obtained by combining all these equations to build a new model that describes the motion of the vehicle considering the modelled physical effects and the new command inputs. In the case of the point-mass model, the following relations are established:

$$\dot{s}(t) = \begin{bmatrix} v_x(t) \\ v_y(t) \\ a_x(t) \\ a_y(t) \end{bmatrix} = \begin{bmatrix} 0 & 0 & 1 & 0 \\ 0 & 0 & 0 & 1 \\ 0 & 0 & 0 & 0 \\ 0 & 0 & 0 & 0 \end{bmatrix} \begin{bmatrix} p_x(t) \\ p_y(t) \\ v_x(t) \\ v_y(t) \end{bmatrix} + \begin{bmatrix} 0 & 0 \\ 0 & 0 \\ 1 & 0 \\ 0 & 1 \end{bmatrix} \begin{bmatrix} \frac{1}{m}\left(F_X^d - F_X^a\right) - g\sin\phi - gC_r\cos\phi \\ \frac{1}{m}\left(F_Y^d - F_Y^a\right) \end{bmatrix}$$

As previously explained, the point-mass model might not be suitable as such in some situations when it is required to model more accurately the behaviour of the vehicle, for instance the turning radius constraint, but also when it comes to control the vehicle, including its orientation. In the above model, the forces $F_{X|Y}^a$, $F_g$ and $F_X^m$ correspond to disturbances that impact the course of the vehicle with respect the command $F_{X|Y}^d$. The effect of these disturbances depends on the values of the three disturbances parameters that are:

$$\theta_d = [\phi, \alpha, \rho]^t$$

The overall behaviour of the system is defined by other parameters that are specific to the vehicle:

$$\theta_s = \left[m, A_f, C_d, C_r\right]^t$$

The wind velocity, air density and road slope angle are by essence unknown to the vehicle. But dealing with the vehicle specific parameters, only nominal values are known in advance for some of them. Indeed, the mass of the vehicle can vary depending on the level of remaining fuel, the number of passengers, the load carried out by the vehicle. The mass can significantly vary on time, thus appearing as another source of disturbances for the controller.

• Bicycle model

The bicycle or Single-Track model describes a road vehicle with only two wheels, where the front and rear wheel pairs are each lumped into one wheel. This simplification is justified since the roll dynamics is not considered. In addition to the variables already introduced for the point-mass model, this model additionally requires the velocity of the steering angle $\delta(t)$, and the parameter $l_{wb}$ describing the wheelbase. Assuming that the body frame is attached to the centre of the rear wheel, this vehicle can be described as a state transition equation using the state:

$$s(t) = \begin{bmatrix} p_x(t) \\ p_y(t) \\ v_X(t) \\ \psi(t) \\ \delta(t) \end{bmatrix}$$

wherein $(p_x(t), p_y(t))$ is the position of the vehicle centre of mass in the Earth frame and $\psi(t)$ is its orientation or body-slip angle measured with respect to the x-axis. One thus has:

$$\dot{s}(t) = \begin{bmatrix} \dot{p}_x(t) \\ \dot{p}_y(t) \\ \dot{v}_X(t) \\ \dot{\psi}(t) \\ \dot{\delta}(t) \end{bmatrix} = \begin{bmatrix} v_x(t) \\ v_y(t) \\ a_X(t) \\ \dot{\psi}(t) \\ \dot{\delta}(t) \end{bmatrix} = f\big(s(t), u(t)\big)$$

$$= \begin{bmatrix} v_X(t)\cos\big(\psi(t)\big) \\ v_X(t)\sin\big(\psi(t)\big) \\ \dfrac{u_1}{m} - \dfrac{1}{2m}\rho C_d A_f (v_X + v_{Xw})|v_X + v_{Xw}| - g\sin\phi - gC_r\cos\phi \\ \dfrac{v_X(t)}{l_{wb}}\tan(\delta(t)) \\ u_2 \end{bmatrix}$$

Wherein $u(t) = [u_1, u_2]^t = \big[F_X^d, v_\delta\big]^t$ represents the command (sent by the controller) of the vehicle where $a_X = \dfrac{F_X^d}{m}$ is the longitudinal acceleration and $v_\delta$ the steering velocity. Note that this model only accounts for the wind in the direction of the body and not in the travelling direction of the centre of mass.

Without losing in generality, many declinations of the bicycle model exist depending on how the system is driven in speed, in acceleration, if the model accounts for tire stiffness, thus leading the velocity angle to not more be aligned with the wheel axis.

It can be noticed that the bicycle state transition equation can be written as:

$$\dot{s}(t) = \begin{bmatrix} v_X(t)\cos\big(\psi(t)\big) \\ v_X(t)\sin\big(\psi(t)\big) \\ \dfrac{u_1}{m} \\ \dfrac{v_X(t)}{l_{wb}}\tan(\delta(t)) \\ u_2 \end{bmatrix} + \begin{bmatrix} 0 \\ 0 \\ -\dfrac{1}{2m}\rho C_d A_f (v_X + v_{Xw})|v_X + v_{Xw}| - g\sin\phi - gC_r\cos\phi \\ 0 \\ 0 \end{bmatrix}$$

where the contribution of the disturbances appears as an additive component to a disturbance-free model. One can further notice that the disturbance contribution depends not only on the disturbance parameters but also the system state and the specific parameters. In this case, the disturbance can be viewed as an unknown contribution to the command used to drive the vehicle, i.e., is an input disturbance.

This kind of disturbances could, in theory, be dealt with using the rejection techniques known in prior art. However, the contribution of the disturbance cannot always be separated this way. For instance, by considering the case of the mass of the vehicle that is not known a priori in practice: the total mass of the vehicle is the sum of the empty mass $m_0$ and the mass of the embarked stuff, people, and fuel, etc. One can write:

$$m = m_0 + \Delta m$$

wherein $\Delta m$ is the unknown part of the mass that can be regarded as a disturbance. In such a case, the state transition equation becomes:

$$\dot{s}(t) = \begin{bmatrix} v_X(t)\cos(\psi(t)) \\ v_X(t)\sin(\psi(t)) \\ \dfrac{u_1}{m_0 + \Delta m} - \dfrac{1}{2(m_0 + \Delta m)}\rho C_d A_f (v_X + v_{Xw})|v_X + v_{Xw}| - g\sin\phi - gC_r\cos\phi \\ \dfrac{v_X(t)}{l_{wb}}\tan(\delta(t)) \\ u_2 \end{bmatrix}$$

Here, the contribution of the disturbance can no more be separated as an additive contribution to the acceleration command, making it more difficult to rely on input disturbance rejection methods. Related to prior art, it could be possible to somehow ignore the contribution of the disturbances by relying on a feedback controller, for instance a PID controller or a MPC controller that uses the disturbance-free model, and leave the controller compensate for the measured deviation resulting from the disturbances. However, in case of strong disturbances, this may lead to a significant degradation of the controller performance, the vehicle showing larger deviations with respect to the planned trajectory, up to become unstable.

As introduced before, adaptive control is a more relevant solution in such cases where the controller is designed to exhibit stable performance even when the system (the vehicle) is subject to changing disturbances.

Adaptive control applied to the vehicle dynamics modelling.

The theorical aspects of the vehicle modelling being expressed, adaptive control is a suitable solution to automatically compensate for variations in systems dynamics, for instance variations caused by the disturbances, by adjusting the controller characteristics, features, or parameters so that the overall system performance remains the same, or rather maintained at an optimum level. To compensate the effect of disturbances on vehicles dynamics, the disturbances need to be estimated either explicitly, e.g., by estimating their contribution to the system model, or implicitly by adjusting the controller to their effect. For example, by supposing that the adaptive control is indirect (i.e., relies on the estimation of the vehicle dynamics to be used by a MPC controller or to compute afterwards an optimal feedback controller), the subproblem is to identify the contribution on the dynamics model of disturbances that can show a great variability in their form and effect depending on the driving environment and conditions (for enabling the vehicle to quickly react to unknown or unmet disturbance patterns).

For the purpose of completeness, a specific architecture of adaptive controllers among those introduced before is detailed, especially the one relying on the MPC algorithm. In this approach, machine learning is applied to identify, from measurement data, the state-space model of the vehicle, including the effect of disturbances, using a neural network. The neural network is then used by the MPC as an analytical model of the vehicle dynamics to accurately predict its future behaviour and optimize the driving command accordingly. The problem is here to design a neural network able to capture the contribution of the disturbances that can show a great variability in their form and effect depending on the driving environment and conditions. It has to be noted that one focuses on disturbance effects that vary slowly compared to the update rate of the controller.

*Implementation for homogenous vehicles*

From now on, we will rely on the discrete time description (thus for a given sampling interval) of the dynamical systems as machine learning techniques manipulate datasets. It is first required to make an assumption on the definition of the state (i.e., of its components such as position, speed, steering angle, etc.) that is best suited to model the dynamics of the system. It is common to use the state definition of physics-based dynamic model that are known to well represent the system (e.g., the state defined for the point-mass model introduced before).

According to the disclosure, it is proposed, in a first implementation, directed to homogenous vehicles, to build the vehicle model as the sum of a nominal component $f^0(i_k)$ and a single federated neural network component $f_{FL}^{nn}\left(i_k^K\right)$. The vehicle model can be expressed as:

$$z_k = f^0(i_k) + f_{FL}^{nn}\left(i_k^K\right)$$

wherein:

- $f^0$ is a base function that represents for example the analytical model of the vehicle (e.g., a Single-Track dynamical model),
- $f_{FL}^{nn}$ is a federated neural network (or part of the neural network), learnt by one or several *homogenous* vehicles,
- $i_k$ represent the last input ($s_{k-1}$, $u_k$),
- $i_k^K$ represent the *K* consecutive previous inputs,
- *FL* stand for "federated learning".

The inventors reasoning which drives this first implementation is the following. Since it is proposed to rely on machine learning and more precisely federated learning to solve this problem, and since one is dealing with indirect adaptive control, a solution consists in estimating the state-space equation from measurements of the true vehicle. The purpose is thus to estimate the unknown true state transition equation $f^v$ of the vehicle:

$$s_k = f^v(s_{k-1}, u_k)$$

To simplify, it is assumed that the state is fully observed without noise ($q_k = y_k = s_k$). However, the results presented here apply to the more general case of noisy and incomplete observations. The goal is thus to optimize the weights (including possible biases) of a deep neural network function $f^{nn}$ from the observations:

$$o_k = f^v(i_k) \text{ with } i_k = (s_{k-1}, u_k)$$

in which $\{i_k\}$ and $\{o_k\}$ are respectively the input features and the target outputs of the neural network, such that:

$$z_k = f_{FL}^{nn}(i_k) \approx o_k = f^v(i_k) = f^v(s_{k-1}, u_k)$$

according to some appropriate measure, e.g., the mean squared error (MSE) minimized on the weights and biases of the neural network using e.g., the Adam algorithm for supervised learning. Typically, the learning is conducted from a dataset built from observations gathered from the real vehicles over a given horizon. Using a neural network to identify the state-space model enables to rely on federated learning to benefit from the learning performed by other vehicles in different environments and conditions. But performing the learning as previously described ($z_k = f_{FL}^{nn}(i_k)$) would only be applicable for strictly similar vehicles and without time-varying disturbances. Indeed, the network is required to gather all the information related to the vehicle at each time instant solely from the pair of information ($i_k$, $o_k$). It is obviously difficult even impossible for a network to capture changes in the disturbance pattern nor to differentiate vehicles with different state-space models only from these values. The inventors proposed, in an example, to compute the output of the network from a given number K of previous inputs combined with their corresponding outputs:

$$\{(i_{k-t_1}, o_{k-t_1}), (i_{k-t_2}, o_{k-t_2}), ..., (i_{k-t_K}, o_{k-t_K})\} \, where \, t_i, t_i \geq 1, t_i \neq t_j \, \forall i, j \in [1, K].$$

In this example, this is in the relationship between the inputs, e.g., here $i_k = (s_{k-j-1}, u_{k-j})$ and the corresponding output $s_{k-j}$ that the model can "estimate" the value of the unknown disturbances. The K pairs of inputs and corresponding outputs need to be selected over a period of time the disturbances are relatively constant. In an embodiment, the pairs of corresponding past inputs and outputs can advantageously be combined as the K most recent (consecutive) inputs:

$$z_k = f_{FL}^{nn}(i_k^K), \text{ where } i_k^K = \{s_{k-1}^K = \{s_{k-K} ... s_{k-1}\}, u_k^K = \{u_{k-K+1} ... u_k\}\}.$$

Providing the information in this way, the output $s_{k-j}$ corresponding to the inputs ($s_{k-j-1}$, $u_{k-j}$) serve as the input for the following outputs $s_{k-j+1}$, thus saving storage resources.

However, it is required to learn from the input data both the state-space representation and the underlying specific parameters. This requires in practice large networks made of several tens or hundreds of neurons, thus slowing down the speed of convergence, the load on the network to handle the exchange the weights and bias back and forth to the federated learning server.

To tackle this problem and improve the neural network training process, the inventors determined that it is suitable to exploit the knowledge of the vehicle parameters (or a partial knowledge, when only nominal values are known) by feeding the vehicle parameters to the network as additional inputs. Hence, for *homogeneous vehicles,* i.e., vehicles that are described by the same state-space model but possibly different specific parameters (e.g., $\theta_s = [m, \rho, C_d, C_r, A_f]^t$). A first solution could consist in using the fact that the state-space equation of the homogeneous vehicles is generic, i.e., has the same form given the value of parameters specific to each vehicle. The inventors thus investigate feeding the network with the value of the known parameters:

$$z_k = f_{FL}^{nn}\left(i_k^K, \theta_s\right)$$

The network can then learn from both the data and the known parameters the state-space equation of the vehicle.

However, despite the introduction of more data and the knowledge of the known specific parameters, the network is still required to learn both the state-space equation of the model and the disturbances contribution. Again, this requires large networks at the cost of possible impairments: slow speed of convergence, weak performance in terms of learning cost, larger sensitivity to local minima, etc. First remind that the main problem is here to identify the contribution of the disturbances.

However, as previously explained, it is possible in control to rely on simple models that represent the behaviour of the true system with a reasonable complexity, the mismatch between the system and the simplified model being considered as a modelling error. In case the synthetic model is precise enough, the modelling error can be ignored. It can also be modelled using a stochastic framework, e.g., as a Gaussian random variable with given variance.

The inventors thus determined that it was possible, in this situation, to rely on the knowledge of the analytical model for the vehicle, leaving the federated neural network "focus" on the learning of the disturbance contribution. The rationale for such an approach is given by the fact that the effect of some disturbances appears as an additive disturbance on the command.

For instance, let's consider the state transition equation of the point-mass model

$$\dot{s}(t) = \begin{bmatrix} v_x(t) \\ v_y(t) \\ a_x(t) \\ a_y(t) \end{bmatrix} = \begin{bmatrix} 0 & 0 & 1 & 0 \\ 0 & 0 & 0 & 1 \\ 0 & 0 & 0 & 0 \\ 0 & 0 & 0 & 0 \end{bmatrix} \begin{bmatrix} p_x(t) \\ p_y(t) \\ v_x(t) \\ v_y(t) \end{bmatrix} + \begin{bmatrix} 0 & 0 \\ 0 & 0 \\ 1 & 0 \\ 0 & 1 \end{bmatrix} \begin{bmatrix} \dfrac{F_X^d}{m} \\ \dfrac{F_Y^d}{m} \end{bmatrix} + \begin{bmatrix} 0 \\ 0 \\ -\dfrac{F_X^a}{m} - g\sin\phi - gC_r\cos\phi \\ -\dfrac{F_Y^a}{m} \end{bmatrix}$$

It appears that the contribution of the external disturbances, here the road slope, wind speed and air density, appears as an additive component to the "disturbance-free" model. One can further notice that the disturbance contribution depends not only on the disturbance parameters but also the system state (e.g., $F_X^a = f(v_X, v_Y)$) and the specific parameters. In this case, the disturbance can be viewed as an unknown contribution to the command used to drive the system, i.e., is an input disturbance. This kind of disturbances can be dealt with using the rejection techniques described previously. However, the contribution of the disturbance cannot always be separated this way. Let's consider for instance the case of the mass of the vehicle that is not known a priori in practice. Indeed, the total mass of the vehicle is the sum of the empty mass $m_0$ and the mass of the embarked stuff, people, and fuel, etc.:

$$m = m_0 + \Delta m$$

wherein Δm is the unknown part of the mass that can be regarded as another disturbance. In such a case, the space state equation becomes:

$$\dot{s}(t) = \begin{bmatrix} v_x(t) \\ v_y(t) \\ a_x(t) \\ a_y(t) \end{bmatrix} = \begin{bmatrix} 0 & 0 & 1 & 0 \\ 0 & 0 & 0 & 1 \\ 0 & 0 & 0 & 0 \\ 0 & 0 & 0 & 0 \end{bmatrix} \begin{bmatrix} p_x(t) \\ p_y(t) \\ v_x(t) \\ v_y(t) \end{bmatrix} + \begin{bmatrix} 0 & 0 \\ 0 & 0 \\ 1 & 0 \\ 0 & 1 \end{bmatrix} \begin{bmatrix} \dfrac{F_X^d}{m_0 + \Delta m} \\ \dfrac{F_Y^d}{m_0 + \Delta m} \end{bmatrix}$$

$$+ \begin{bmatrix} 0 \\ 0 \\ -\dfrac{F_X^a}{m_0 + \Delta m} - g\sin\phi - gC_r\cos\phi \\ -\dfrac{F_Y^a}{m_0 + \Delta m} \end{bmatrix}$$

Here, as previously explained, the contribution of the disturbances can no more be separated as an additive contribution to the acceleration command. It is proposed here to extend the principle of writing the state-space representation as the sum of two components, but instead of a disturbance-free part combined with a disturbance contribution, the system is described as the superposition of a component corresponding to nominal values of the disturbances (no wind, no slope, reference air density, etc.) combined with an actual disturbances term (with respect to the nominal mode).

Then, the state transition equation can be expressed as:

$$\dot{s}(t) = f(s(t), u(t), \theta_s, \theta_d) = f\big(s(t), u(t), \theta_s, \theta_d^0\big) + \big(f(s(t), u(t), \theta_s, \theta_d) - f\big(s(t), u(t), \theta_s, \theta_d^0\big)\big)$$

$$\dot{s}(t) = f(s(t), u(t), \theta_s, \theta_d) \triangleq f\big(s(t), u(t), \theta_s, \theta_d^0\big) + g(s(t), u(t), \theta_s, \theta_d)$$

where $\theta_d^0$ corresponds to the nominal values of the disturbance parameters and $\theta_d$ their actual values, and:

$$\theta_d^0 = [\phi = 0, \alpha = 0, m = m_0]^t$$

Again, one use here continuous time expression for the sake of simplicity, but same results apply to the in discrete time. It is thus possible to isolate the contribution of the disturbances into an additive component.

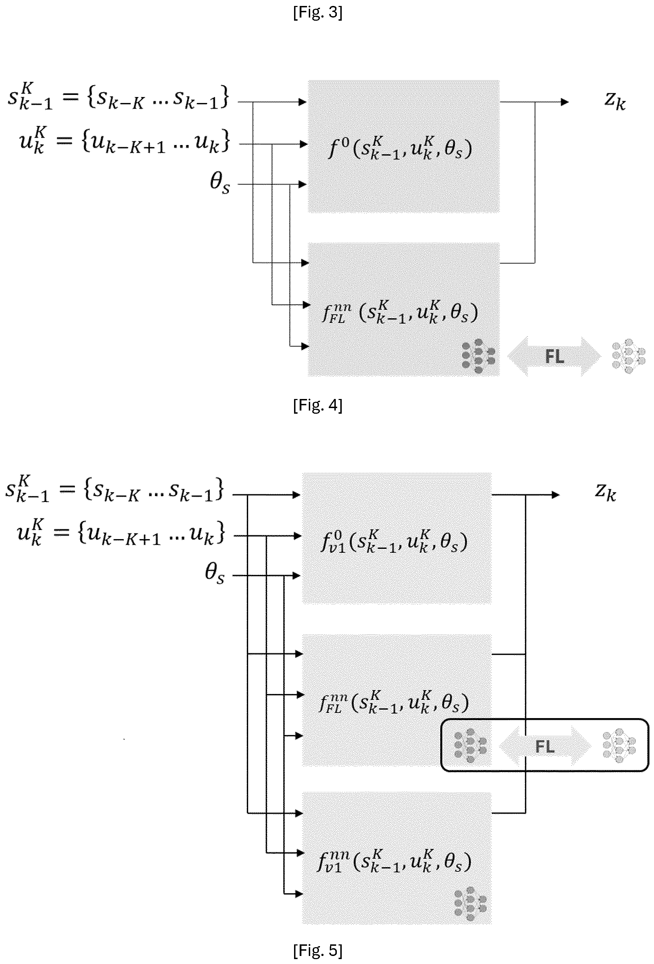

In consequence, the inventors went to the vehicle model as the sum (combination) of the nominal component $f^0$ ($i_k$) and the federated neural network component $f_{FL}^{nn}\big(i_k^K\big)$. The analytical (nominal) component describes the behaviour of the vehicle for nominal values of the disturbances. This model can be physically based (as exposed above), conceptual or a neural network but learned before in conditions corresponding to the nominal conditions for the disturbances (exemplified in figure 4). The vehicle's model is thus built such as:

$$z_k = f^0(i_k) + f_{FL}^{nn}\big(i_k^K, [\theta_s]\big)$$

Where the parameters of the neural network are trained such that:

$$z_k \approx f^v(s_{k-1}, u_k)$$

The component $f_{FL}^{nn}$ is thus optimized to learn, from the data, the contribution $g(.)$ of the disturbances as introduced before, parametrized or not (thus the notation $[\theta_s]$) by the specific parameters of the vehicle. Assuming the vehicle is part of a set of identical types of vehicles, e.g., sold by a vehicle manufacturer, the component $f_{FL}^{nn}$ can then be shared between these types of vehicles, either in real time (while the vehicles are functioning on a road portion, for example), or at the occasion of batch operations (e.g. while the vehicle is connected to a home network, for example).

*Implementation for heterogenous vehicles*

According to the disclosure, it is proposed, in a second implementation directed to heterogenous vehicles, to collaboratively learn from the observations the common contribution, if any, of the disturbance in the state-space model of all vehicles. This is a federated sub-network learning approach. The vehicle model can then be expressed as:

$$z_k = f_{v1}^0(i_k) + f_{FL}^{nn}\left(i_k^K, [\theta_s]\right) + f_{v1}^{nn}\left(i_k^K, [\theta_s]\right)$$

Wherein:

- $f_{v1}^0$ corresponds to the nominal part of the model (for nominal values of the disturbances),

- $f_{FL}^{nn}$ corresponds to the federated neural network (or part of a unique neural network) devoted to collaboratively learn the common part of the disturbance effects,

- $f_{v1}^{nn}$ corresponds to the individual neural network (or part of the unique neural network) devoted to locally learn the remaining contribution of the disturbances for each vehicle, presently the vehicle v1. Note that this can also serve to learn the model mismatch error.

The inventors reasoning which drives this second implementation is the following and is merely based on the explanations given in relation with the first implementation. Indeed, in practice, vehicles can greatly differ from one another in terms of size, weight, engine specifications, and altogether in terms of dynamics. The state-equation of each vehicle can still be written as the superposition of a nominal component and one describing the contribution of the actual disturbances with respect to the nominal mode. Hence, for two different vehicles, identified as v1 and v2, one can note:

$$\dot{s}(t) = f_{v1}\left(s(t), u(t), \theta_s^{v1}, \theta_d^{v1}\right) \triangleq f_{v1}^0\left(s(t), u(t), \theta_s^{v1}, \theta_d^{v1,0}\right) + g_{v1}\left(s(t), u(t), \theta_s^{v1}, \theta_d^{v1}\right)$$

$$\dot{s}(t) = f_{v2}\left(s(t), u(t), \theta_s^{v2}, \theta_d^{v2}\right) \triangleq f_{v2}^0\left(s(t), u(t), \theta_s^{v2}, \theta_d^{v2,0}\right) + g_{v2}\left(s(t), u(t), \theta_s^{v2}, \theta_d^{v2}\right)$$

Where it is assumed that the two vehicles can be modelled using the same state s(t) and are driven by the same kind of command u(t).

However, unlike for homogeneous vehicles, the disturbance components have not the same form in general, i.e., $g_{v1} \neq g_{v2}$. The inventors thus proposed to collaboratively learn, from the observations, the common contribution ($c_v$), if any, of the disturbances in the state-space model of all vehicles, and the specific contributions ($h_{v1}$, $h_{v2}$, etc.).

It is assumed here that one can write:

$$g_{v1}\left(s(t), u(t), \theta_s^{v1}, \theta_d^{v1}\right)$$
$$= c_v\left(s(t), u(t), \theta_s^{v1}, \theta_d^{v1}\right) + \left(g_{v1}\left(s(t), u(t), \theta_s^{v1}, \theta_d^{v1}\right) - c_v\left(s(t), u(t), \theta_s^{v1}, \theta_d^{v1}\right)\right)$$

And

$$g_{v2}\left(s(t), u(t), \theta_s^{v2}, \theta_d^{v2}\right)$$
$$= c_v\left(s(t), u(t), \theta_s^{v2}, \theta_d^{v2}\right) + \left(g_{v2}\left(s(t), u(t), \theta_s^{v2}, \theta_d^{v2}\right) - c_v\left(s(t), u(t), \theta_s^{v2}, \theta_d^{v2}\right)\right)$$

Ideally with $c_v \neq 0$.

One can further write:

$$g_{v1}\left(s(t), u(t), \theta_s^{v1}, \theta_d^{v1}\right) = c_v\left(s(t), u(t), \theta_s^{v1}, \theta_d^{v1}\right) + h_{v1}\left(s(t), u(t), \theta_s^{v1}, \theta_d^{v1}\right)$$

$$g_{v2}\left(s(t), u(t), \theta_s^{v2}, \theta_d^{v2}\right) = c_v\left(s(t), u(t), \theta_s^{v2}, \theta_d^{v2}\right) + h_{v2}\left(s(t), u(t), \theta_s^{v2}, \theta_d^{v2}\right)$$

This approach enables for instance to learn the disturbance contribution of the slope and wind effects that comes as an additive component on top of the command. But this approach enables to extract the contribution of disturbances that affect similarly all the vehicles. The vehicle model is thus made of three components, for vehicle v1 (see figure 5, where *sp* stands for specific parts of the vehicle v1):

$$z_k = f_{v1}^0(i_k) + f_{FL}^{nn}\left(i_k^K, [\theta_s]\right) + f_{v1}^{nn}\left(i_k^K, [\theta_s]\right)$$

- $f_{v1}^0$ corresponds to the nominal component of the model (for nominal values of the disturbances) specific to each vehicle, here to vehicle v1,

- $f_{FL}^{nn}$ corresponds to the federated neural network component devoted to collaboratively learn the common part of the disturbances for all vehicles, i.e. the contribution $c_v(.)$,

- $f_{v1}^{nn}$ corresponds to the individual neural network component devoted to locally learn the remaining contribution $h_{v1}$ (.) of the disturbances for each vehicle, here vehicle v1.

In this context, only the common part of the overall neural network ( $f_{FL}^{nn}$ ) is being federated while the specific remaining part ( $f_{v1}^{nn}, f_{v2}^{nn}$ , etc.) is optimized individually by (for) each vehicle (or for each type of vehicle, like in the homogenous implementation). The two components $f_{FL}^{nn}$ and $f_{v1}^0$ can be parametrized or not by the known specific parameters. Various possible implementations of the federated sub-network learning approach considering a traditional multilayer perceptron (MLP). Solutions may differ in the aggregation step of the weights connecting the inputs to the first federated layer and those connecting the last federated layer to the output layer. The proposed algorithm is applicable to any variation of these examples.

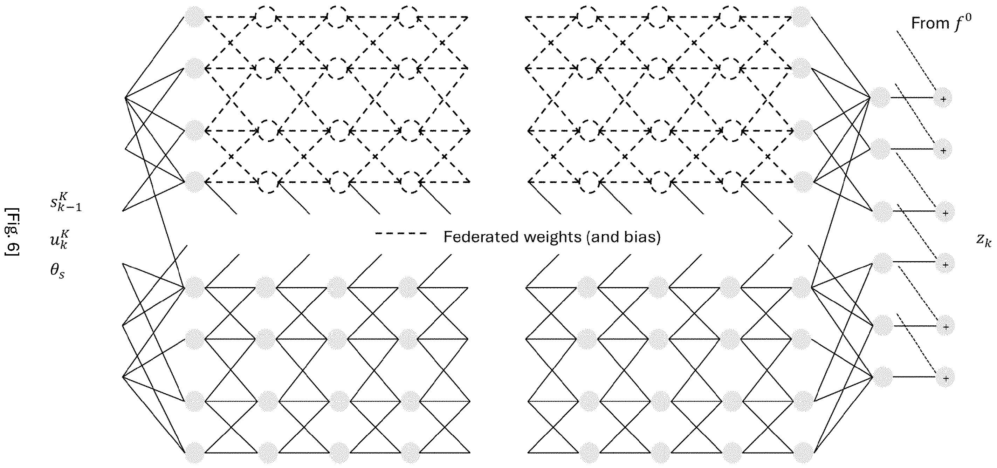

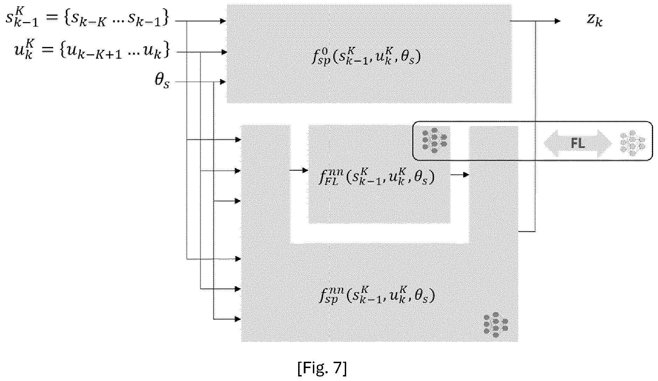

To provide more room to the federated sub-network to capture the common contribution of the disturbances effect between the different vehicles, it is proposed as illustrated on figure 7 to embed this sub-network in the specific neural network, i.e., thus introducing a given number of layers between the inputs and outputs of the global model and those of the federated sub-network (on figure 7, *sp* stands for *"specific part"* and *FL* stands for *"Federated Learning"* and one can note that several specific parts may be present). This approach can also be interpreted as a way to differentiate the input and output of the federated sub-network from those of the global model. It can be noted that the federated sub-network can comprise any weights and biases of the overall neural network. As exemplified on figure 6, selecting a block of contiguous weights shall help the federated sub-network to better learn the underlying function that relates the disturbances to the overall state-space model.

*Adaptative controller* as a *neural network trained using Reinforcement Learning*

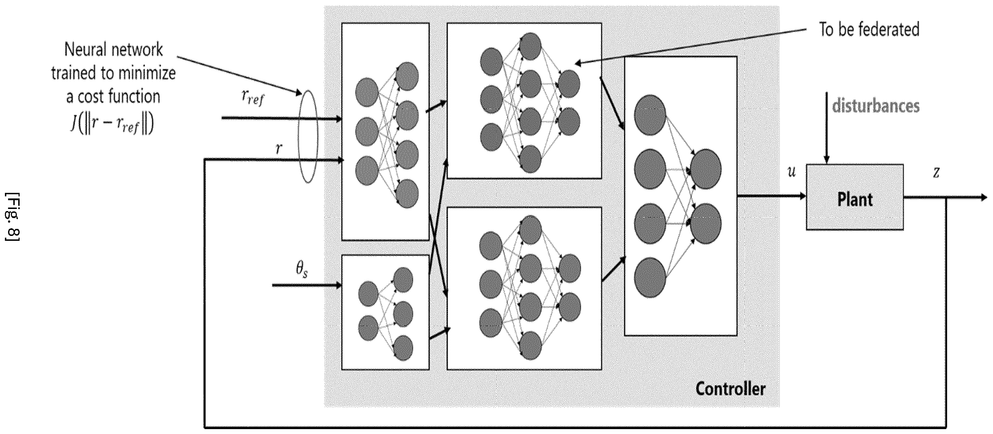

The inventors also determined that the previous way of separating federated learning from specific learning can also be implemented in the other architecture of adaptive controllers introduced before. In this approach, the controller is directly implemented as a neural network that is built to generate the appropriate command given the actual contribution of the disturbances captured from measurements data. As previously explained, only a part of the overall neural network is federated between the vehicles in order to capture the common contribution, if any, of the disturbances on the generation of the control vector of all the vehicles. The neural network controller is composed of multiple layers/components (example in figure 8):

- a component to be federated that aims to cancel the common effect of the disturbances,
- a component trained simultaneously with the above component to capture the specific effect of the disturbances,
- input/output parts that play the role of interfaces to unify the architecture of the federated part.

The neural network-based controller can be trained using reinforcement learning. The reinforcement learning principle consists in optimizing the neural network parameters (weights and bias) according to a reward function computed based on observations and actions: for a "good" action, a high reward is attributed, and for a "bad" action a low reward is attributed. The reward function is a decreasing function of the control error (difference between the reference input and the output). The controller is trained (optimized) using reinforcement learning:

- (1) Obtain the output of the vehicle,
- (2) Sample (select) an action u based on the output using the neural network,
- (3) Apply the action (control input) u to the vehicle,
- (4) Obtain the output y,
- (5) Compute the error between the reference input and the output e,
- (6) Compute the reward r based on the error value,

- (7) Apply the gradient descent to the neural network coefficients to maximize the reward,

The described algorithm represents the theoretical basic principle of controller design using reinforcement learning. In practice, the gradient descent algorithm is applied to a collection of samples, i.e. steps 1-6 are repeated $n$ times before applying step 7.

Note that this example algorithm is applied individually (locally). There is no federated learning for the controller itself. For this example, the inputs of the neural network are the output y and the reference (alternatively, one can use the error e) and the output is the control input u.

Additional features and implementation tweaks

General implementation of the controller according to the disclosure being explained, the inventors thus made several updates of the proposed architectures, in order to better suit to several problematics notably for realizing an adaptation of the observations and for adding flexibility for learning the disturbances.

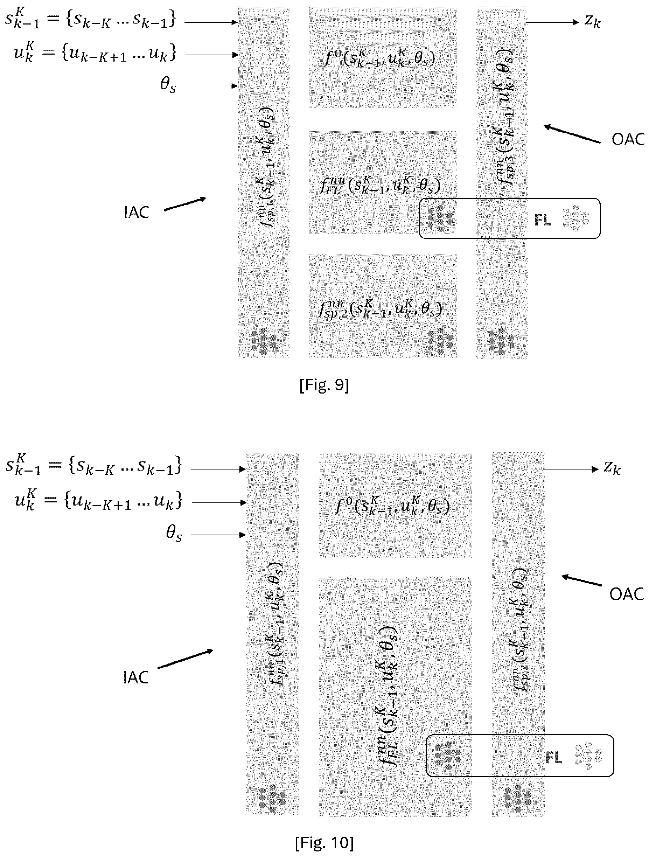

For instance, figures 9 and 10 expose two configurations of the layout of the components as exposed herein before, in which additional neural networks are added for instantiating a constant and common learning framework in vehicles ( $f_{sp,1}^{nn}, f_{sp,2}^{nn}, f_{sp,3}^{nn}$ are specific to a given vehicle, e.g., specific to vehicle v1 or v2 as explained herein before).

Hence, in such implementations, the controller comprises an input adaptation component (IAC), implementing $f_{sp,1}^{nn}$ . The input adaptation component is in charge of adapting input control vectors ($u_k$,...) values, input state vectors ($s_{k-1}$, ...) values and initial set of parameters ($\theta_s$) values for use by the first, second and third components. The input adaptation component can also serve to transform inputs that could be different between different vehicles to a common set of inputs to be applied in input of the shared federated sub-network.

In addition, the controller also comprises an output adaptation component (OAC), implementing $f_{sp,2}^{nn}$ . The output adaptation component is for example in charge of transforming the output of the federated sub-network into values to be used by the control vector generation component that can be different according to the vehicles.

The IAC and/or the OAC can be useful for instance when the vehicles observe their internal state using different variables. Similarly, the vehicles can control their engine using different commands, a torque, a gear level, a driving force, a breaking force, etc. As the first component is (at least partly) to be shared between several vehicles, it implies that all the vehicles need to adapt their actual inputs and outputs to the somehow generic inputs and outputs of the shared model. The OAC can also serve basically to combine the at least one first, second and third composing values.

For instance, as exposed in figure 10, along with the previously exposed neural networks, an additional neural network is present, and one has three specific neural networks ( $f_{sp,1}^{nn}, f_{sp,2}^{nn}, f_{sp,3}^{nn}$ ). The first ( $f_{sp,1}^{nn}$ ) neural network is an adapter of the observations, and acts as a variable transformer component to ensure the input data ( $'s_{k-1}^{K}, u_k^{K}$ , $\theta_s$) are transformed in accordance with the expected data for the first, second and third component (when the second and third components are implemented). Similarly, the output adaptation neural network ( $f_{sp,3}^{nn}$ ) is used for combining the sets of composing values obtained from the model, the federated learning part and the specific part ( $f_{sp,2}^{nn}$ ) in to order to obtain the expected state of the vehicle ($z_k$). This allows benefiting from the generalization principle of deep neural networks allowing to adapt, up to some extends, to disturbance profiles not met during the training. This output adaptation allows adding a post function that replaces the basic summation of the different parts of the model by a network individually trained to give more degrees of freedom for (i) the *"common disturbance"* part to extract a more significant contribution from the data, (ii) to better compensate for the mismatch modelling error.

In addition, the disclosure also relates to a federated multivehicle system. The system leverages federated learning and vehicle-to-server communication to enhance the collective knowledge on disturbances of autonomous heterogeneous vehicles within a dedicated 5G automotive network or via network connectivity at predetermined locations. Each vehicle hosts a portion of a neural network dedicated to learning common effects of disturbance on driving conditions. This common segment, using federated learning techniques, constantly evolves and improves based on the data collected by individual vehicles during their operations.

For example, when a vehicle gathers new data or refines its segment of the neural network, it transmits this information to a central server. This server, specialized for combining and refining the received segments, aggregates the updates from multiple vehicles. Utilizing merging algorithms, it merges these updates, retaining the most relevant and effective improvements while discarding redundancies or errors. In some examples, the server may calculate a mean of each weight/bias of the portion of the network. Once the combination process is complete, the refined common segment is transmitted back to the vehicles.

The system optimizes communication protocols for low latency and high reliability, crucial for real-time decision-making in autonomous driving scenarios. The 5G network ensures seamless connectivity, facilitating rapid data exchange even in dynamic environments, ensuring safe update of the portion of the neural network dedicated to common disturbances. In locations where 5G coverage may be limited, vehicles can switch to WiFi connections, maintaining synchronization with the server.

Overall, this system fosters collaborative learning among autonomous vehicles, continually enhancing their capabilities through shared knowledge while maintaining adaptability to diverse connectivity environments.

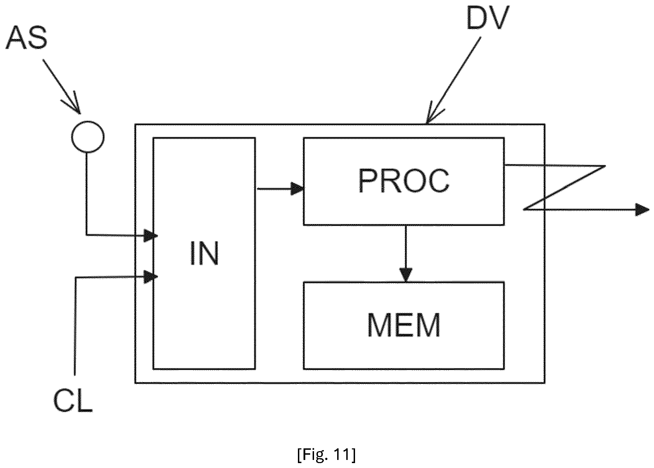

As shown in figure 11, the device DV for implementing the adaptive controller as presented above, can comprises an antenna system AS, for example coupled through an interface IN to a processing circuit including a processor PROC and a memory MEM. Alternatively, or in complement, or as a variant, of the antenna system AS, necessary data (e.g., a weights and bias, predetermined parameters, vehicle analytical model, etc.) can also be received thru a communication link CL allowing the device to generate the control vectors for the vehicle and the federated (part of) neural network. The memory stores at least instructions of a computer program according to the present disclosure. By carrying out this type of processing, and in particular by implementing the data structures (weights management, federated knowledge, etc.) according to the disclosure, the device's processor has proven to be able to efficiently share common disturbance knowledge bet ween vehicles, including heterogenous ones. Such an effect is obviously not possible by attempting to calculate or obtain these results manually or mentally, as this would be resource-consuming, inefficient, and not exploitable as explained herein above.

In preferred embodiments, the computer system or device comprises one or more processors (which may belong to a same computer or to different computers) and one or more memories (magnetic hard disk, optical disk, electronic memory, or any computer readable storage medium) in which a computer program product is stored, in the form of a set of program-code instructions to be executed in order to implement all or part of the steps of the generating and/or testing method. Alternatively, or in combination thereof, the computer system can comprise one or more programmable logic circuits (FPGA, PLD, etc.), and/or one or more specialized integrated circuits (ASIC), etc., adapted for implementing all or part of said steps of the generating and/or testing method and/or part of the modules described above. In other words, the computer system comprises a set of means configured by software (specific computer program product) and/or by hardware (processor, FPGA, PLD, ASIC, etc.) to implement the steps of the disclosed methods.

## Claims

1. A computer implemented adaptive controller (AC) for use in the control of a vehicle, wherein the computer implemented adaptive controller is configured to provide a control vector $u_k$ to a vehicle driving component (VDC) of the vehicle, the adaptive controller (AC) comprising at least one first component (Cfnn_c) configured to compute a first set of composing values for the control vector $u_k$, of the vehicle according to a first neural network ($f^{nn}$), the first set of composing values being related at least to the effect of disturbances on a dynamical behaviour of vehicles, at least one part ($f_{FL}^{nn}$) of the first neural network ($f^{nn}$) being configured to be shared with at least one other vehicle.

2. The adaptive controller (AC) according to claim 1, wherein the adaptive controller (AC) further comprises at least one second component (Cf0) configured to compute a second set of composing values for the control vector ($u_k$) of the vehicle according to a base function.

3. The adaptive controller (AC) according to claim 1, wherein the adaptive controller (AC) comprises at least one third component (Cfnn_v) configured to compute a third set of composing values for the control vector ($u_k$) of the vehicle according to a second neural network ($f_{v1}^{nn}$) related to the effect of disturbances on a dynamical behaviour of the vehicle (v1).

4. The adaptive controller (AC) according to claim 2, wherein the base function is an analytical model which encapsulates predetermined knowledge on the behaviour of the vehicles.

5. The adaptive controller (AC) according to claim any of claims 2 and 4, wherein the base function belongs to the group comprising:

   - a dynamical model of the vehicle obtained from physics laws,
   - a dynamical model of the vehicle obtained, through model identification, from measurements and observations on the behaviour of the vehicle,
- a predefined list of parameters of the controller,
- a physics-based model of the disturbances.

6. The adaptive controller (AC) according to any of preceding claim, wherein the at least one first component is configured to provide the first set of composing values as a function at least one previous input.

7. The adaptive controller (AC) according to any of preceding claim, wherein the adaptive controller (AC) further comprises an input adaptation component (IAC), the input adaptation component being configured to adapt input control vectors ($u_k$,...) values, input state vector ($s_{k-1}$, ...) values, input errors between observed state vectors and a reference target, and initial set of parameters ($\theta_s$) values for used by the at least one first component (Cfnn_c).

8. The adaptive controller (AC) according to claim 7, wherein the input adaptation component (IAC) takes the form of a neural network.

9. The adaptive controller (AC) according to any of preceding claim, wherein the adaptive controller (AC) further comprises an output adaptation component (OAC), the output adaptation component being configured to calculate at least one adapted composing value from at least the first set of composing values for use by the output control vector generation.

10. The adaptive controller (AC) according to claim 9, wherein the output adaptation component (OAC) takes the form of a neural network.

11. The adaptive controller (AC) according to any of preceding claim, wherein the adaptive controller (AC) further comprises a control vector generation component, the output control vector generation component being configured to calculate the control vector ($u_k$) as a function said at least one adapted composing value.

12. The adaptive controller (AC) according to any of preceding claim, wherein the adaptive controller (AC) is configured to operate a controller that belongs to the group:

- a model predictive controller,
- a controller fully implemented as a neural network,
- an analytical controller configured with parameters estimated using a neural network.

13. An electronic device comprising a processor, a memory and at least one communication interface, wherein the electronic device comprises a computer implemented adaptive controller (AC) according to any of the preceding claims.

14. A vehicle comprising an electronic device for controlling according to claim 13.

15. Computer program product comprising instructions which, when executed by at least one processor, configure said at least one processor to carry out a method by the computer implemented adaptive controller (AC) according to any one of claims 1 to 12.

[Fig. 1]

[Fig. 2]

[Fig. 3]

[Fig. 4]

[Fig. 5]

[Fig. 6]

$$s_{k-1}^K = \{s_{k-K} \ldots s_{k-1}\}$$

$$u_k^K = \{u_{k-K+1} \ldots u_k\}$$

$$\theta_s$$

$$f_{sp}^0(s_{k-1}^K, u_k^K, \theta_s)$$

$$f_{FL}^{nn}(s_{k-1}^K, u_k^K, \theta_s)$$

FL

$$f_{sp}^{nn}(s_{k-1}^K, u_k^K, \theta_s)$$

$$z_k$$

[Fig. 7]

To be federated

Neural network trained to minimize a cost function $J(\|r - r_{ref}\|)$

[Fig. 8]

$$s_{k-1}^K = \{s_{k-K} \dots s_{k-1}\}$$

$$u_k^K = \{u_{k-K+1} \dots u_k\}$$

$$\theta_s$$

$$z_k$$

$$f^0(s_{k-1}^K, u_k^K, \theta_s)$$

$$f_{sp,3}^{nn}(s_{k-1}^K, u_k^K, \theta_s)$$

OAC

$$f_{sp,1}^{nn}(s_{k-1}^K, u_k^K, \theta_s)$$

$$f_{FL}^{nn}(s_{k-1}^K, u_k^K, \theta_s)$$

IAC

FL

$$f_{sp,2}^{nn}(s_{k-1}^K, u_k^K, \theta_s)$$

[Fig. 9]

$$s_{k-1}^K = \{s_{k-K} \dots s_{k-1}\}$$

$$u_k^K = \{u_{k-K+1} \dots u_k\}$$

$$\theta_s$$

$$z_k$$

$$f^0(s_{k-1}^K, u_k^K, \theta_s)$$

$$f_{sp,2}^{nn}(s_{k-1}^K, u_k^K, \theta_s)$$

OAC

$$f_{sp,1}^{nn}(s_{k-1}^K, u_k^K, \theta_s)$$

IAC

$$f_{FL}^{nn}(s_{k-1}^K, u_k^K, \theta_s)$$

FL

[Fig. 10]

[Fig. 11]

Europäisches
Patentamt
European
Patent Office
Office européen
des brevets

## EUROPEAN SEARCH REPORT

**Application Number**

EP 24 30 6053

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SAURANIL DEBARSHI ET AL: "Robust EMRAN based Neural Aided Learning Controller for Autonomous Vehicles", ARXIV.ORG, CORNELL UNIVERSITY LIBRARY, 201 OLIN LIBRARY CORNELL UNIVERSITY ITHACA, NY 14853, 22 June 2021 (2021-06-22), XP081993467, | 1-7,9, 11-15 | INV. B60W50/00 |
| A | * page 2 - page 5; figure 1 * ----- | 8,10 | |
| A | US 2024/190435 A1 (NASIR MOHAMMED [US] ET AL) 13 June 2024 (2024-06-13) * paragraph [0175] * ----- | 13,14 | |
| A | DE 10 2020 132827 A1 (BAYERISCHE MOTOREN WERKE AG [DE]) 9 June 2022 (2022-06-09) * paragraphs [0021] - [0031] * ----- | 13,14 | |
| | | | TECHNICAL FIELDS SEARCHED (IPC) |
| | | | B60W G06N |

The present search report has been drawn up for all claims

| Place of search | Date of completion of the search | Examiner |
|---|---|---|
| Munich | 19 October 2024 | Stolle, Martin |

EPO FORM 1503 03.82 (P04C01)

## ANNEX TO THE EUROPEAN SEARCH REPORT
## ON EUROPEAN PATENT APPLICATION NO.

EP 24 30 6053

This annex lists the patent family members relating to the patent documents cited in the above-mentioned European search report.
The members are as contained in the European Patent Office EDP file on
The European Patent Office is in no way liable for these particulars which are merely given for the purpose of information.

19-10-2024

| Patent document cited in search report | Publication date | Patent family member(s) | Publication date |
|---|---|---|---|
| US 2024190435 A1 | 13-06-2024 | DE 102023134313 A1 | 13-06-2024 |
| | | US 2024190435 A1 | 13-06-2024 |
| DE 102020132827 A1 | 09-06-2022 | DE 102020132827 A1 | 09-06-2022 |
| | | WO 2022122311 A1 | 16-06-2022 |

EPO FORM P0459

For more details about this annex : see Official Journal of the European Patent Office, No. 12/82